# EUROPÄISCHE PATENTSCHRIFT

(11) **EP 1 303 717 B1**
(45) Veröffentlichungstag und Bekanntmachung des Hinweises auf die Patenterteilung: **28.12.2005**
(21) Anmeldenummer: 01984177.4
(22) Anmeldetag: 10.07.2001
(51) Int. Cl.: F16K 7/06, G05D 16/20

(54) **VENTIL**
VALVE
VANNE

(30) Priorität: 11.07.2000 AT 11892000
(43) Veröffentlichungstag der Anmeldung: 23.04.2003
(73) Patentinhaber: Drechsel, Arno, 9900 Lienz (AT)
(72) Erfinder: Drechsel, Arno, 9900 Lienz (AT)
(74) Vertreter: Torggler, Paul Norbert
(86) Internationale Anmeldenummer: PCT/AT2001/000229
(87) Internationale Veröffentlichungsnummer: WO 2002/004848

(56) Entgegenhaltungen:
- EP-A- 0 309 886
- DE-A- 19 907 109
- US-A- 4 372 345
- US-A- 5 078 362
- US-A- 5 694 973

## Beschreibung

Die Erfindung betrifft ein Ventil für ein flüssiges oder gasförmiges Medium mit einem beweglichen Ventilkörper über den der lichte Durchflußquerschnitt verstellbar ist.

Ein Ventil mit den im Oberbegriff von Anspruch 1 definierten Merkmalen ist aus der US-A-5 694 973 bekannt.

Derartige Ventile kommen in vielen Bereichen der Wasserwirtschaft oder Industrie, in denen Wasser oder andere flüssige Medien, eventuell auch gasförmige Medien präzise kontrolliert, dosiert und verteilt werden müssen, zum Einsatz. Die bekannten Druckregler sind so ausgelegt, daß sie über einen vordefinierten Volumenstrom den Druck konstant halten. Unter der Bedingung, daß ein ausreichender Volumenstrom vorhanden ist, bedeutet dies, daß eine nachgeschaltete Düse mit dem benötigten (berechneten) Druck beaufschlagt wird. In der Praxis erweisen sich jedoch beide Größen Druck- und Volumenstrom als veränderlich.

Aufgabe der Erfindung ist es daher, ein Ventil anzugeben, das auch bei veränderlichem Volumenstrom eine nachgeschaltete Düse mit konstantem oder definiertem veränderlichen Druck beaufschlagen kann.

Erfindungsgemäß wird dies dadurch erreicht, daß das Ventil - in Durchflußrichtung gesehen nach dem Ventilkörper einen Drucksensor zur Erfassung des Druckes des Mediums aufweist und der Ventilkörper in Abhängigkeit vom Signal aus dem Drucksensor und/oder einer externen Steuereinheit geregelt ist, wobei es sich als besonders vorteilhaft erwiesen hat, wenn die Regeleinrichtung direkt am Ventil, beispielsweise in Form einer elektronischen Schaltung auf einer Platine, angeordnet ist.

Dadurch, daß das Ventil einen eigenen Regelkreis hat, ist eine gesteuerte, variable Druckregelung möglich. Das heißt, die aus der dem Ventil nachgeschalteten Düse austretende Wassermenge muß nicht mehr wie bisher über den Austausch von Düsen mit verschiedenen Düsendurchmessern bestimmt werden, sondern wird vielmehr einfach mit dem Druck bei einer bestimmten Düse geregelt. Wenn die Regeleinrichtung wie gemäß einem weiteren Ausführungsbeispiel der Erfindung vorgesehen, ist zum stufenlosen Regeln des Druckes und/oder zum Ein-/Ausschalten des Ventiles ausgebildet ist, verkörpert ein derartiges Ventil zwei Komponenten in einer Konstruktion, nämlich einen Druckregler und ein On/Off Ventil.

Eine besonders vorteilhafte Ausführung besteht darin, in einem Ventil mit einem Ventilgehäuse, in dem ein flexibler Schlauch und als Ventilkörper eine Quetscheinrichtung zum kontinuierlichen Drosseln des Durchflußes des Strömungsmediums angeordnet sind, wobei vor und/oder nach der Quetschstelle ein Drucksensor angeordnet ist und die Quetscheinrichtung In Abhängigkeit vom Signal aus dem Drucksensor und/oder einer externen Steuereinheit geregelt ist

Um Druckwerte nicht zu verfälschen, kann gemäß einem weiteren Ausführungsbeispiel vorgesehen sein, daß die Wandstärke des Schlauches im Berührungsbereich mit dem außerhalb des Schlauches angeordneten Drucksensor auf ein Minimum reduziert ist. Als besonders vorteilhaft hat es sich hierfür herausgestellt, wenn das Ventilgehäuse mindestens zwei im Wesentlichen quer zur Längsrichtung des Schlauches ausgerichtete zentrische Führungen aufweist, in denen der Drucksensor und Teile der Quetscheinrichtung angeordnet sind, so daß neben einer einfachen Konstruktion zusätzlich ein Schutz des sensiblen Drucksensors gegeben ist.

Gemäß einem weiteren Aspekt der Erfindung, kann die Quetscheinrichtung hydraulisch betätigbar sein, wodurch sich eine besonders exakte Einstellung des Solldruckes ergibt Um jedoch die Konstruktion möglichst einfach und wartungsfrel zu halten, kann gemäß einer weiteren Ausführungsform der Erfindung vorgesehen sein, daß die Quetscheinrichtung elektrisch betätigbar ist In diesem Fall hat es sich als besonders günstig herausgestellt, wenn die Quetscheinrichtung wenigstens einen Schieber, einen Hebel und einen Motor, vorzugsweise einen Servomotor, umfaßt, wobei der Motor den Hebel antreibt und dieser den Schleber, der den Schlauchdurchfluß zudrückt oder öffnet, betätigt. Durch die elektrische Betätigung des Schiebers über einen Servomotor, wird eine umweltfreundliche und annähernd wartungsfreie Konstruktion erreicht.

Gemäß einem weiteren Aspekt der Erfindung kann vorgesehen sein, daß der Ventilkörper von einem beidseitig beaufschlagbaren Kolben betätigbar ausgebildet ist, wobei der Kolben in einem Kolbengehäuse angeordnet ist und wenigstens eine Kammer über ein Steuerventil mit variablem Druck beaufschlagbar ist. Eine technisch einfache Lösung ergibt sich, wenn das Steuerventil von einem Linearantrieb, beispielsweise einem Servo- oder Voice-Coil-Motor, angetrieben ist, wobei der Linearantrieb in Abhängigkeit vom Signal aus dem Drucksensor geregelt ist. Als besonders vorteilhaft hat es sich dabei herausgestellt, wenn das Steuerventil als konische Nadel ausgebildet und in einem Verbindungskanal angeordnet ist, über den der Kammer das Regelmedium zugeführt wird.

Weiters soll eine Vorrichtung zum großflächigen Ausbringen von flüssigen Medien, insbesondere Wasser, mit einer zentralen Flüssigkeitsquelle, einem Flüssigkeitsleitungssystem, einer zentralen Steuereinheit und elektrischen Steuerleitungen zu einzelnen Ventilen an mehreren verteilten Austrittsstellen des Flüssigkeitsleitungssystems angegeben werden.

Bevorzugt wird das erfindungsgemäße Ventil bei einer Beregnungsanlage eingesetzt, um eine präzise kontrollierte Wasserverteilung zu erzielen. Bei einer derartigen Präzisionsberegnung werden beispielsweise durch Feuchte- bzw. Temperatursensoren und/oder Satellitenüberwachung gemessene Parameter vom System analysiert und die notwendige Wasserabgabe dementsprechend punktgenau und unterschiedlich geregelt und so kostbares Wasser gespart. Weiters erlaubt ein mit solchen erfindungsgemäßen Regelventilen bestücktes Beregnungssystem sowohl den Linearals auch den Kreisbetrieb mit der derselben Düsenbestückung.

Um einzelne Düsen gezielt ein- oder ausschalten zu können, kann gemäß einer weiteren Ausführungsvarfante der erfindungsgemäßen Vorrichtung vorgesehen sein, daß zumindest ein Teil der Ventile Individuell in der Durchflußmenge kontinuierlich verstellbar und/oder ein-/ausschaltbar sind, so daß keine zusätzlichen Ventile mit aufwendiger Solenoidsteuerung angebracht werden müssen.

Weitere Vorteile und Einzelheiten der Erfindung werden im Folgenden anhand der Figurenbeschreibung näher erläutert. In diesen zeigen
- Fig. 1: einen skizzenhaften Schnitt durch ein erfindungsgemäßes Ventil,
- Fig. 2: eine schematische Darstellung eines Regelkreislaufes,
- Fig. 3: eine skizzenhafte Darstellung einer Vorrichtung zum großflächigen Ausbringen von flüssigen Medien und
- Fig. 4: eine skizzenhafte Darstellung eines weiteren Ausführungsbeispieles.

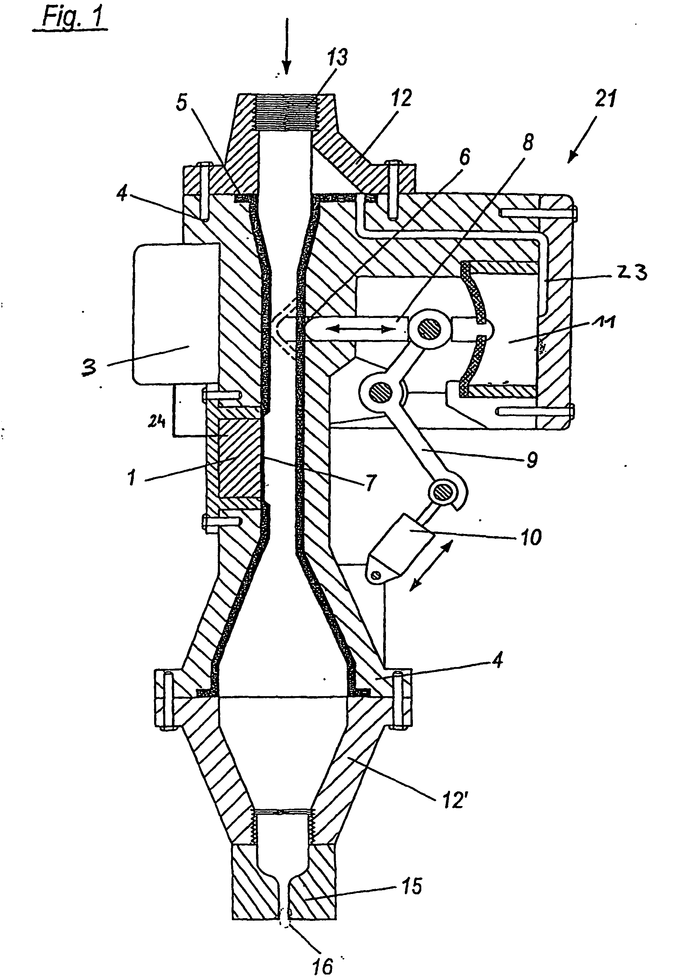

Das in Fig. 1 dargestellte Ventil 21 besteht aus einem profiliertem Gummischlauch 5 welcher prinzipiell flach ist und zu den Enden hin der einfachen Herstellung wegen rundgeformt ist. Der Schlauch 5 ist in einem Ventilgehäuse 4 eingebettet, welches zwei Führungen 6 aufweist, die Zugang zum Schlauch 5 bieten. In der oberen Führung 6 ist ein Schieber 8 eingebaut, welcher über einen Hebel 9, der von einem Servomotor 10 oder Voice-coil-Motor angetrieben wird und den Schlauch 5 zudrückt (strichlierte Linie) oder öffnet. Die untere Führung 6 dient als Sitz für den Drucksensor 1. Im Berührungsbereich 7 mit dem Drucksensor 6 ist die Wandstärke des Schlauches 5 auf das Minimum reduziert. Die Regeleinrichtung 3 ist in Form einer elektronischen Schaltung auf einer Platine am Gehäuse 4 des Ventiles 21 angebracht. Das Ventligehäuse 4 wird oben und unten durch Verbindungsmuffen 12, 12' geschlossen, so daß das Druckregelventil 21 einbaufertig ist. Die obere Muffe 12 weist eine Zuflußöffnung 13 auf, durch die das zu regelnde Medium eingebracht wird. Im Anschluß an die untere Muffe 12' ist dem Ventil 21 eine Düse 15 mit einer Düsenöffnung 16 nachgeordnet.

Bei dem in Fig. 1 dargestellten Ventil besteht der Ventilkörper im wesentlichen aus dem Schieber 8 und dem vom Schieber hereingedrückten Schlauchabschnitt. Alternativ wäre es möglich, ohne Schlauch den Schleber direkt als Ventilkörper zu benutzen, wobei dann entsprechende Dichtungen nötig sind.

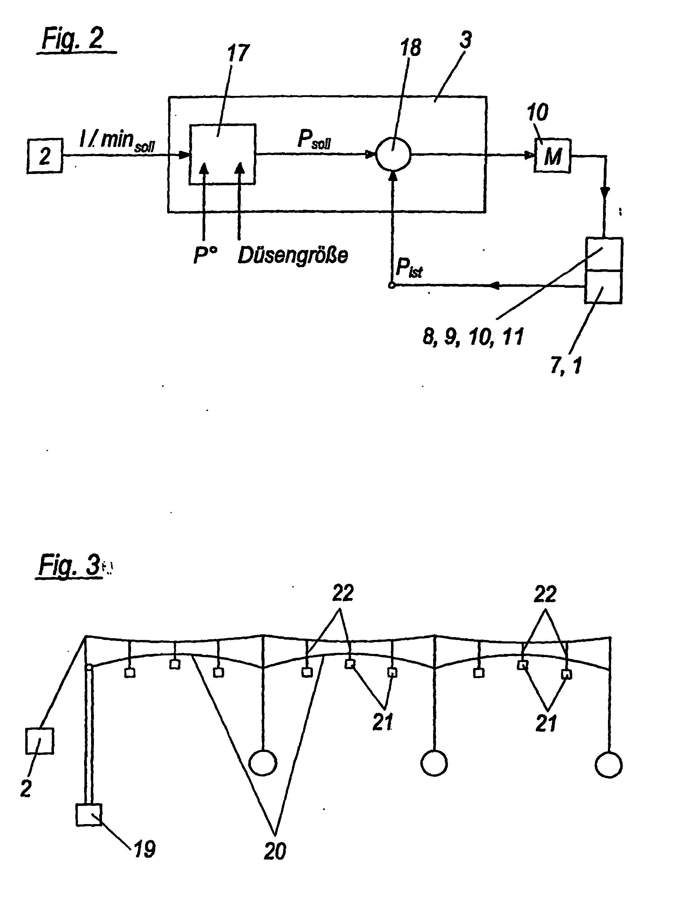

Anhand der in Fig. 2 dargestellten Regeleinrichtung 3 wird in weiterer Folge die Funktionsweise des erfindungsgemäßen Ventiles 21 näher beschrieben. Die Regeleinrichtung 3 verfügt über einen Speicher 17 und einem Regler 18. Der Speicher 17 erhält über eine externe Steuereinheit 2 oder vom Benutzer eine Durchflußmenge in l/min soll und speichert den daraus resultierenden Systemdruck sowie die Düsengröße. Aus diesen Werten berechnet er den Pₛₒₗₗ, den er an den Regler 18 weitergibt Der im Ventil 21 eingebaute Drucksensor 1 erfaßt den Pᵢₛₜ und sendet den Wert an den Regler 18 der Regeleinrichtung 3. In Abhängigkeit davon wird der Motor 10 angesteuert, welcher seinerseits den Schieber 8 betätigt, welcher den Schlauch 5 so weit zusammendrückt, bis der benötigte Druck Pₛₒₗₗ eingestellt ist.

Bei der in Fig. 3 gezeigten Vonichtung sind die Ventile 21 über ein Flüssigkeitsleitungssystem 20 mit einem zentralen Flüssigkeitsgeber 19 verbunden. Außerdem sind alle Druckregelventile 21 mit Steuerleitungen 22 mit einer externen Steuereinheit 2 verbunden. Zusätzlich können die Ventile 21 durch eine Erkennungsleitung verbunden sein, welche es erlaubt, Ventile 21 im Falle eines Defektes einfach auszutauschen, ohne die Codierung zu verlieren.

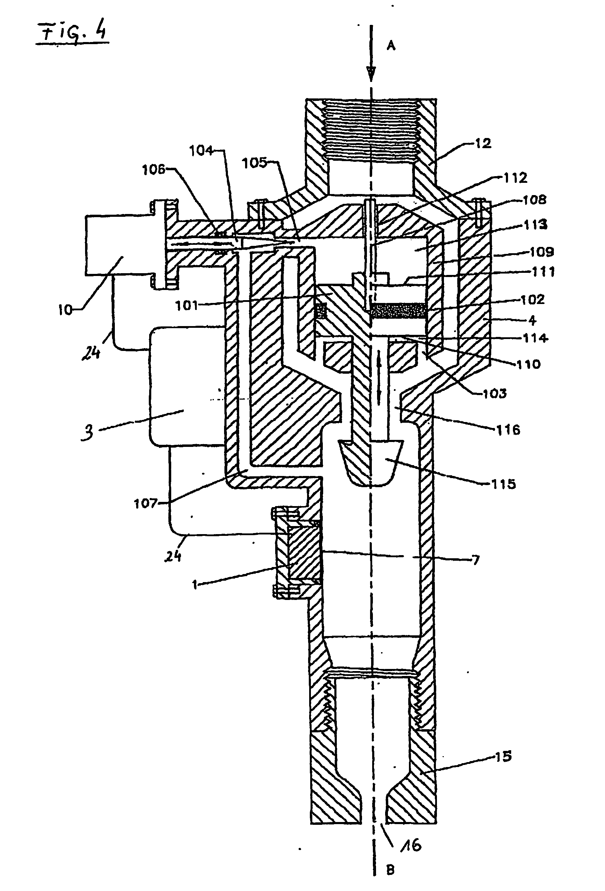

Bei dem in Fig. 4 gezeigten Ventil tritt das Strömungsmedium durch den Eintritt A in das Ventil ein. Das Kolbengehäuse 109 wird umspült, dabei tritt Wasser durch die Öffnung 112, Spalt zwischen dem Stift 108 und dem Ventilkörper 109, in die Kammer 113 ein und beaufschlagt die Oberseite 111 des Kolbens 101. Es wird eine Kraft nach unten, In Flußrichtung erzeugt Der Stift 108 hat die Aufgabe, mit seinen Bewegungen den feinen Spalt 112 von Ablagerungen und Sedimenten freizuhalten. Gleichzeitig strömt das Medium durch die unteren Öffnungen 103 In die Kammer 114 und beaufschlagt die Unterseite 110 des Kolbens 101. Es wird eine Kraft nach oben erzeugt Die zwei Kammern 113 und 114 sind durch ein Dichtelement 102, vorzugsweise durch eine Membrane, getrennt um die Drücke in den Kammern 113 und 114 von einander getrennt zu halten. Der Kolben 101 kann sich axial auf und ab bewegen. Am unteren Ende sitzt ein Stößel 115 welcher in Abhängigkeit von der Position des Kolbens 101 die Öffnung 116 ganz öffnet oder verschließt und dabei je nach Position des Kolbens 101 einen Druckabfall erzeugt.

Der Drucksensor 1, welcher durch eine dünne Gummimembrane 7 vom Wasser getrennt ist, mißt den vorhandenen Druck und gibt den Ist-Wert an die Regeleinrichtung 3 weiter, wo er mit dem Soll-Wert verglichen wird. Die Regeleinrichtung 3 gibt in weiterer Folge über die Steuerleitung 24 ein Signal an den Linearantrieb 10. Dieser Linearantrieb 10 kann ein Servomotor oder ein Voice Coil Motor sein. Von diesem Linearantrieb 10 wird eine zum Ende hin konische Nadel 104 axial zum Verbindungskanal 105 bewegt. Der Verbindungskanal 105 verbindet die Druckkammer 113 mit dem Kanal 107, weicher das Regelmedium wieder rückführt Die Nadel 104 ist durch Dichtelemente 106, vorzugsweise eine Membrane, abgedichtet.

Geregelt wird das Ventil über den Differenzdruck, der zwischen dem Spalt 112 und der durch die Nadel verengten Verbindungsöffnung 105 hervorgerufen wird. Dabei stellt sich der Druck in den zwei Kammern 113 und 114 so ein, daß der Kolben 101 in einer bestimmten Lage zum Stehen kommt. Der Stößel 115 wird dabei gegenüber der Öffnung 116 so positioniert das der Soll-Druckwert erreicht wird. Verschließt die Nadel 104 die Verbindungsöffnung 105, so ist die von der Kolbenfläche 111 erzeugte Kraft größer als die von der Kolbenfläche 114 erzeugte Kraft, das Ventil ist ganz offen. Dies ist der Fall, so lange der Eintrittsdruck bei A kleiner ist als der gewünschte Soll-Druck. Ist die Nadel 104 ganz arretiert und die Verbindungsöffnung 105 ganz frei, überwiegt die von der Kolbenfläche 114 erzeugte Kraft. Der Kolben 101 wird nach oben geschoben, dabei verschließt der Stößel 115 die Öffnung 116, das Ventil ist zu.

Jede Position der Nadel 104, welche die Verbindungsöffnung 105 nicht ganz verschließt oder ganz freigibt, erzeugt eine Druckdifferenz, welche den Kolben 101 in eine bestimmte Position schiebt Entsprechend dazu erzeugt die vom Stößel freigegebene Öffnung 116 den gewünschten Druckabfall zur Erreichung des Soll-Druckwertes, der zur Erzeugung eines bestimmten Volumenstroms durch die fixe Düse 15 benötigt wird.

Es versteht sich von selbst, daß die Erfindung nicht auf diese konkreten Ausführungsbeispiele beschränkt ist.

## Patentansprüche

1. Ventil für ein flüssiges oder gasförmiges Medium mit einem beweglichen Ventilkörper, über den ein lichter Durchflussquerschnitt verstellbar ist, wobei das Ventil einen Drucksensor zur Erfassung des Druckes P₍ᵢₛₜ₎ des Mediums aufweist, wobei der erfasste Druck P₍ᵢₛₜ₎ vom Drucksensor in Form von elektrischen Signalen weitergeleitet und einer Regeleinrichtung zugeführt wird, deren Regler den Ventilkörper in Abhängigkeit vom Signal aus dem Drucksensor ansteuert, wobei die Regeleinrichtung einen Drucksollwert P₍ₛₒₗₗ₎ ermittelt, den sie ihrem Regler vorgibt, und wobei an der Austrittsseite des Ventiles (21) am Ventilgehäuse (4), beispielsweise über eine Muffe (12'), eine Düse (15) mit einer fixen Düsenöffnung (16) angeordnet ist, **dadurch gekennzeichnet, dass** der Drucksensor (1) - in Durchflussrichtung gesehen - nach dem Ventilkörper (8, 115) angeordnet ist, wobei die Regeleinrichtung (3) den Drucksollwert P₍ₛₒₗₗ₎ in Abhängigkeit von der Solldurchflussmenge (l/minₛₒₗₗ) unter Einbeziehung der Düsenöffnung (16) der nachgeschalteten Düse (15) ermittelt und der Schaft des Ventilkörpers (8, 115) antriebsseitig mit einer Druckkammer (11, 113, 114) in Wirkverbindung steht, wobei die Druckkammer (11, 113, 114) über eine Leitung (23) bzw. eine Durchtrittsöffnung (112) mit dem eingangsseitigen Volumenstrom des flüssigen oder gasförmigen Mediums verbunden und von diesem mit Druck beaufschlagt ist.

2. Ventil nach Anspruch 1, **dadurch gekennzeichnet, dass** die Düse (15) in einem lösbaren, vorzugsweise verschraubbaren Düsenkörper ausgebildet ist.

3. Ventil nach Anspruch 1 oder 2, **dadurch gekennzeichnet, dass** die Regeleinrichtung (3), beispielsweise in Form einer elektronischen Schaltung auf einer Platine, direkt am Ventilgehäuse (4) angeordnet ist.

4. Ventil nach Anspruch 1 bis 3, **dadurch gekennzeichnet, dass** die Regeleinrichtung (3) zum stufenlosen Regeln des Druckes P₍ᵢₛₜ₎ und/oder zum Ein/Ausschalten des Ventils (21) ausgebildet ist.

5. Ventil nach einem der Ansprüche 1 bis 4 mit einem Ventilgehäuse, in dem ein flexibler Schlauch und als Ventilkörper eine Quetscheinrichtung zum kontinuierlichen Drosseln des Durchflusses des Strömungsmediums angeordnet sind, **dadurch gekennzeichnet, dass** nach der Quetschstelle ein Drucksensor (1), der den erfassten Druck P₍ᵢₛₜ₎ in Form von elektrischen Signalen weitergibt, angeordnet ist und die Quetscheinrichtung (8, 9, 10, 11) in Abhängigkeit vom Signal aus dem Drucksensor (1) geregelt ist, wobei eine Regeleinrichtung (3) den Drucksollwert P₍ₛₒₗₗ₎ vorgibt.

6. Ventil nach Anspruch 5, **dadurch gekennzeichnet, dass** das Ventilgehäuse (4) mindestens zwei im wesentlichen quer zur Längsrichtung des Schlauches (5) ausgerichtete, zentrische Führungen (6) aufweist, in denen der Drucksensor (1) und Teile (8) der Quetscheinrichtung (8, 9, 10, 11) angeordnet sind.

7. Ventil nach Anspruch 5 oder 6, **dadurch gekennzeichnet, dass** die Wandstärke des Schlauches (5) im Berührungsbereich (7) mit dem außerhalb des Schlauches (5) angeordneten Drucksensor (1) reduziert ist.

8. Ventil nach einem der Ansprüche 5 bis 7, **dadurch gekennzeichnet, dass** die Quetscheinrichtung (8, 9, 10, 11) hydraulisch und/oder elektrisch betätigbar ist.

9. Ventil nach Anspruch 8, **dadurch gekennzeichnet, dass** die Quetscheinrichtung wenigstens einen Schieber (8), einen Hebel (9) und einen Motor (10), vorzugsweise einen Servomotor, umfasst, wobei der Motor (10) den Hebel (9) antreibt und dieser den Schieber (8), der den Schlauchdurchfluss zudrückt oder öffnet, betätigt.

10. Ventil nach einem der Ansprüche 1 bis 4, **dadurch gekennzeichnet, dass** der Ventilkörper (115) von einem beidseitig beaufschlagbaren Kolben (101) betätigbar ausgebildet ist, wobei der Kolben (101) in einem Kolbengehäuse (109) angeordnet ist und wenigstens eine Kammer (113, 114) über ein Steuerventil (104) mit variablem Druck beaufschlagbar ist.

11. Ventil nach Anspruch 10, **dadurch gekennzeichnet, dass** das Steuerventil (104) von einem Linearantrieb (10), beispielsweise einem Servo- oder Voice-Coil-Motor, angetrieben ist, wobei der Linearantrieb (10) in Abhängigkeit vom Signal aus dem Drucksensor (1) geregelt ist.

12. Ventil nach Anspruch 10 oder 11, **dadurch gekennzeichnet, dass** das Steuerventil (104) als konische Nadel ausgebildet und in einem Verbindungskanal (107, 105) angeordnet ist, über den der Kammer (113, 114) das Regelmedium zugeführt wird.

13. Ventil nach einem der Ansprüche 10 bis 12, **dadurch gekennzeichnet, dass** im Kolbengehäuse (109) für jede Kammer (113, 114) wenigstens eine Durchtrittsöffnung (112, 103) für das flüssige oder gasförmige Medium angeordnet ist.

14. Verwendung eines Ventils nach einem der Ansprüche 1 bis 13 in einer Vorrichtung zum großflächigen Ausbringen von flüssigen Medien, insbesondere einer Beregnungsanlage für Pflanzenkulturen, mit einer zentralen Flüssigkeitsquelle, einem Flüssigkeitsleitungssystem, einer zentralen Steuereinheit und elektrischen Steuerleitungen zu einzelnen Ventilen an mehreren verteilten Austrittsstellen des Flüssigkeitsleitungssystems.

## Claims

1. A valve for a liquid or gaseous medium comprising a movable valve body, by way of which an internal through-flow cross-section is adjustable, wherein the valve comprises a pressure sensor for detecting the pressure P₍ᵢₛₜ₎ of the medium, wherein the detected pressure P₍ᵢₛₜ₎ is passed from the pressure sensor in the form of electrical signals and is supplied to a regulating device whose regulator triggers the valve body in dependence on the signal from the pressure sensor, wherein the regulating device ascertains a pressure reference value P₍ₛₒₗₗ₎ which it presets for its regulator and wherein at the discharge side of the valve on the valve housing, for example by way of a sleeve, a nozzle with a fixed nozzle opening is arranged, **characterized in that** the pressure sensor (1) - viewed in the through-flow direction - is arranged downstream of the valve body (8, 115), wherein the regulating device (3) detects the pressure reference value P₍ₛₒₗₗ₎ in dependence on the reference through-flow amount (l/min_{ref}) with inclusion of the nozzle opening (16) of the downstream-disposed nozzle (15) and the shaft of the valve body (8, 115) is operatively connected at the driving end to a pressure chamber (11, 113, 114), wherein the pressure chamber (11, 113, 114) is connected by way of a conduit (23) or a through-flow opening, respectively, to the input volume flow of the liquid or gaseous medium and is acted upon thereby with pressure.

2. A valve according to claim 1, **characterized in that** the nozzle (15) is provided in a releasable, preferably screwable nozzle body.

3. A valve according to claim 1 or 2, **characterized in that** the regulating device (3) is arranged directly at the valve housing (4), for example in the form of an electronic circuit on a circuit board.

4. A valve according to claims 1 to 3, **characterized in that** the regulating device (3) is adapted for stepless regulating of the pressure P₍ᵢₛₜ₎ and/or for switching the valve (21) on/off.

5. A valve according to one of claims 1 to 4, with a valve housing, in which a flexible tube and a pinch device as the valve body is arranged for continuously throttling the through-flow of the flow medium, **characterized in that** after the pinch location a pressure sensor (1) is arranged, which transmits the detected pressure P₍ᵢₛₜ₎ in the form of electrical signals, and the pinch device (8, 9, 10, 11) is regulated in dependence on the signal from the pressure sensor (1), wherein a regulating device (3) presets the pressure reference value P₍ₛₒₗₗ₎.

6. A valve according to claim 5, **characterized in that** the valve housing (4) has at least two centrical guides (6) which are oriented substantially transversely with respect to the longitudinal direction of the hose (5) and in which the pressure sensor (1) and parts (8) of the pinch device (8, 9, 10, 11) are arranged.

7. A valve according to claim 5 or 6, **characterized in that** the wall thickness of the hose (5) is reduced in the contact region (7) with the pressure sensor (1) arranged outside the hose (5).

8. A valve according to one of claims 5 to 7, **characterized in that** the pinch device (8, 9, 10, 11) is hydraulically and/or electrically actuable.

9. A valve according to claim 8, **characterized in that** the pinch device comprises at least one slider (8), a lever (9) and a motor (10), preferably a servo motor, wherein the motor (10) drives the lever (9) and the lever (9) actuates the slider (8), which shuts by pressure or opens the hose through-flow.

10. A valve according to claims 1 to 4, **characterized in that** the valve body (115) is adapted to be actuable by a piston (101) which can be acted upon at both sides, wherein the piston (101) is arranged in a piston housing (109) and at least one chamber (113, 114) can be acted upon by way of a control valve (104) with a variable pressure.

11. A valve according to claim 10, **characterized in that** the control valve (104) is driven by a linear drive (10), for example by a servo or a voice coil motor, wherein the linear drive (10) is regulated in dependence on the signal from the pressure sensor (1).

12. A valve according to claim 10 or 11, **characterized in that** the control valve (104) is in the form of a conical needle and is arranged in a connecting channel (107, 105), by way of which the regulating medium is fed to the chamber (113, 114).

13. A valve according to one of claims 10 to 12, **characterized in that** at least one through opening (112, 103) for the liquid or gaseous medium is arranged in the piston housing (109) for each chamber (113, 114).

14. Use of a valve according to one of claims 1 to 13 in an apparatus for the discharge of liquid media over a large surface, in particular a watering installation for plant cultivation, comprising a central liquid source, a liquid conduit system, a central control unit and electrical control lines to individual valves at a plurality of distributed discharge locations of the liquid conduit system.

## Revendications

1. Valve pour fluide liquide ou gazeux, comprenant un corps de valve mobile au moyen duquel une section d'écoulement libre peut être réglée, la valve comportant un capteur de pression servant à détecter la pression P₍ᵢₛₜ₎ du fluide, la pression détectée P₍ᵢₛₜ₎ étant transmise par le capteur de pression sous forme de signaux électriques et étant amenée à un dispositif de réglage dont le régulateur commande le corps de valve en fonction du signal issu du capteur de pression, le dispositif de réglage calculant une valeur de consigne de pression P₍ₛₒₗₗ₎ qu'il prescrit à son régulateur et une buse (15) à orifice de buse fixe (16) étant disposée sur le boîtier de valve (4), du côté de la sortie de la valve (21), par exemple par l'intermédiaire d'un manchon (12'), **caractérisée en ce que** le capteur de pression (1) - considéré dans le sens d'écoulement - est disposé après le corps de valve (8, 115), le dispositif de réglage (3) calculant la valeur de consigne de pression P₍ₛₒₗₗ₎ en fonction du débit de consigne (I/minₛₒₗₗ), en incluant l'orifice de buse (16) de la buse (15) placée en aval, et la tige du corps de valve (8, 115) étant en liaison active, côté menant, avec une chambre de pression (11, 113, 114), la chambre de pression (11, 113, 114) étant reliée, par l'intermédiaire d'un conduit (23) ou d'une ouverture de passage (112), au courant volumique entrant de fluide liquide ou gazeux et étant alimentée en pression par celui-ci.

2. Valve selon la revendication 1, **caractérisée en ce que** la buse (15) est réalisée dans un corps de buse amovible, de préférence vissable.

3. Valve selon la revendication 1 ou 2, **caractérisée en ce que** le dispositif de réglage (3), réalisé par exemple sous forme d'un circuit électronique sur une platine, est disposé directement sur le boîtier de valve (4).

4. Valve selon les revendications 1 à 3, **caractérisée en ce que** le dispositif de réglage (3) est conçu pour régler la pression P₍ᵢₛₜ₎ de façon continue et/ou mettre la valve (21) en ou hors circuit.

5. Valve selon l'une des revendications 1 à 4, comportant un boîtier de valve dans lequel sont disposés un tuyau souple flexible et, en tant que corps de valve, un dispositif d'étranglement pour réduire de manière continue l'écoulement du fluide acheminé, **caractérisée en ce qu'**un capteur de pression (1) qui transmet la pression détectée P₍ᵢₛₜ₎ sous forme de signaux électriques est disposé après le point d'étranglement, et **en ce que** le dispositif d'étranglement (8, 9, 10, 11) est réglé en fonction du signal issu du capteur de pression (1), un dispositif de réglage (3) prescrivant quant à lui la valeur de consigne de pression P₍ₛₒₗₗ₎.

6. Valve selon la revendication 5, **caractérisée en ce que** le boîtier de valve (4) comporte au moins deux guides centraux (6), orientés sensiblement transversalement à la direction longitudinale du tuyau souple (5), dans lesquels sont disposés le capteur de pression (1) et des parties (8) du dispositif d'étranglement (8, 9, 10, 11).

7. Valve selon la revendication 5 ou 6, **caractérisée en ce que** l'épaisseur de la paroi du tuyau souple (5) est plus faible dans la zone de contact (7) avec le capteur de pression (1) disposé à l'extérieur du tuyau souple (5).

8. Valve selon l'une des revendications 5 à 7, **caractérisée en ce que** le dispositif d'étranglement (8, 9, 10, 11) peut être actionné hydrauliquement et/ou électriquement.

9. Valve selon la revendication 8, **caractérisée en ce que** le dispositif d'étranglement comprend au moins un coulisseau (8), un levier (9) et un moteur (10), de préférence un servomoteur, le moteur (10) entraînant le levier (9) et celui-ci actionnant le coulisseau (8) qui ferme ou ouvre la lumière du tuyau souple.

10. Valve selon l'une des revendications 1 à 4, **caractérisée en ce que** le corps de valve (115) est réalisé de manière à pouvoir être actionné par un piston (101) qui peut être alimenté des deux côtés, le piston (101) étant disposé dans un boîtier de piston (109) et au moins une chambre (113, 114) pouvant être alimentée en pression variable par l'intermédiaire d'une valve de commande (104).

11. Valve selon la revendication 10, **caractérisée en ce que** la valve de commande (104) est entraînée par un entraînement linéaire (10), par exemple un servomoteur ou un moteur à bobine mobile, l'entraînement linéaire (10) étant réglé en fonction du signal issu du capteur de pression (1).

12. Valve selon la revendication 10 ou 11, **caractérisée en ce que** la valve de commande (104) est réalisée sous forme d'aiguille conique et est disposée dans un canal de raccordement (107, 105) par l'intermédiaire duquel le fluide de réglage est amené à la chambre (113, 114).

13. Valve selon l'une des revendications 10 à 12, **caractérisée en ce que**, pour chaque chambre (113, 114), au moins une ouverture de passage (112, 103) destinée au fluide liquide ou gazeux est ménagée dans le boîtier de piston (109).

14. Utilisation d'une valve selon l'une des revendications 1 à 13, et ce dans un dispositif d'apport de fluides liquides sur une grande surface, notamment dans une installation d'arrosage pour cultures de plantes, comportant une source centrale de liquide, un système de conduites de liquide, une unité centrale de commande et des lignes électriques de commande desservant des valves distinctes situées à plusieurs points de sortie répartis du système de conduites de liquide.
